# EUROPEAN PATENT APPLICATION

(11) **EP 2 628 978 A1**
(43) Date of publication of application: **21.08.2013**
(21) Application number: 13153284.8
(22) Date of filing: 30.01.2013
(51) Int. Cl.: F16H 57/02, F03D 11/04, F24F 3/14, F16H 57/027

(54) **Method of handling a gearbox**

(30) Priority: 14.02.2012 US 201261598362 P
(71) Applicant: Vestas Wind Systems A/S, 8200 Aarhus N (DK)
(72) Inventor: Schlünzen, Hans Christian, 7100 Vejle (DK)

(57) **Abstract**

A method of handling a gearbox comprises sealing input and output shafts of the gearbox to prevent moisture from entering the gearbox, connecting a dehumidifier to the gearbox, and operating the dehumidifier to reduce the relative humidity inside the gearbox.

## Description

### Technical Field

The present invention relates to methods of handling gearboxes, particularly for wind turbine applications.

### Background

Wind turbines typically include a rotor with large blades driven by the wind. The blades convert the kinetic energy of the wind into rotational mechanical energy. The mechanical energy is typically transferred via drivetrain to a generator, which then converts the energy into electrical power. Oftentimes it is necessary to increase the rotational speed of the rotor to the speed required by the generator. This is accomplished by a gearbox, which converts a low-speed, high-torque input from the rotor into a lower-torque, higher-speed output for the generator.

Gearboxes for wind turbines involve many parts and often require specialized manufacturing knowledge. As a result, gearboxes are often produced by manufacturers who specialize in this type of industrial equipment (i.e., original equipment manufacturers), rather than by wind turbine manufacturers. The separate production adds transport and handling steps to take into consideration. Additionally, the logistics associated with wind turbine installation can be complex themselves, meaning that gearboxes may be subject to additional transport and handling by the wind turbine manufacturer even after receiving them from suppliers.

The transport and handling presents a challenge in that the gearboxes are exposed to different environmental conditions. Some of the conditions may increase the risk of components becoming damaged by corrosion or pollution. Moreover, the transport and handling often means that an appreciable period of time elapses from when the gearboxes are manufactured to when they are used in operation. This has the potential to lead to false brinelling ("standstill marks") on the components, thereby affecting their reliability and performance.

### Summary

A method of handling a gearbox is described below. The method generally comprises sealing input and output shafts of the gearbox to prevent moisture from entering the gearbox. The method also comprises connecting a dehumidifier to the gearbox so that the dehumidifier communicates with an interior of the gearbox. The dehumidifier is then operated to reduce the relative humidity inside the gearbox.

Thus, rather than focusing solely on the surrounding environment to which the gearbox is exposed, the method focuses on the interior of the gearbox. The space to be dehumidified is reduced to that surrounding the internal components so that conditions may be optimized to prevent corrosion and other undesirable effects. Moreover, this enables the use of a smaller, less-expensive dehumidifier, which may even be mounted to and transported with the gearbox to facilitate repeating the dehumidification procedure later on if necessary.

Indeed, according to a further aspect of the method, the gearbox is not operated for a period of time. This period of time may include storage *per se* and short-term activities (loading/unloading, transporting, and other handling) leading up to or following the storage. The relative humidity within the gearbox is monitored and maintained below a predetermined amount (i.e., a maximum level) based on the period of time. Maintaining the relative humidity below the predetermined amount may involve repeating the dehumidification procedure and/or performing a rotation procedure to start a new period of time.

### Brief Description of the Drawings

Fig. 1 is a perspective view of one example of a wind turbine.
Fig. 2 is a schematic view illustrating steps for handling a gearbox.

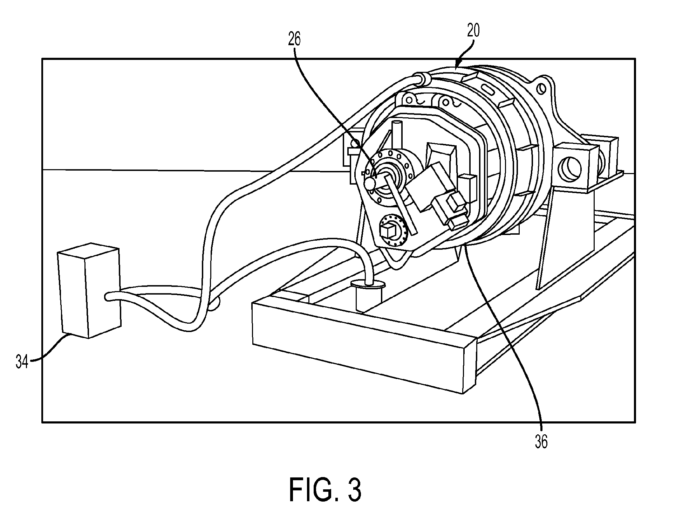

Fig. 3 is a schematic view illustrating a rotation procedure for the gearbox.

### Detailed Description

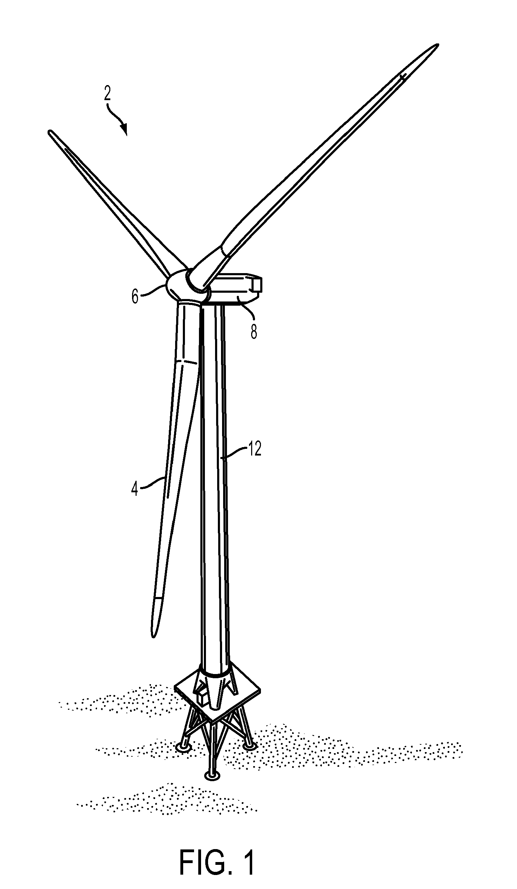

Fig. 1 shows one example of a wind turbine 2. The wind turbine 2 includes a rotor having blades 4 mounted to a hub 6, which is supported by a nacelle 8 on a tower 12. Although an offshore wind turbine is shown, it should be noted that the description below may be applicable to other types of wind turbines. Indeed, the description below focuses on a particular component common to many wind turbines, namely a gearbox for increasing the rotational speed of the rotor as the rotational energy is transferred to a generator within the nacelle.

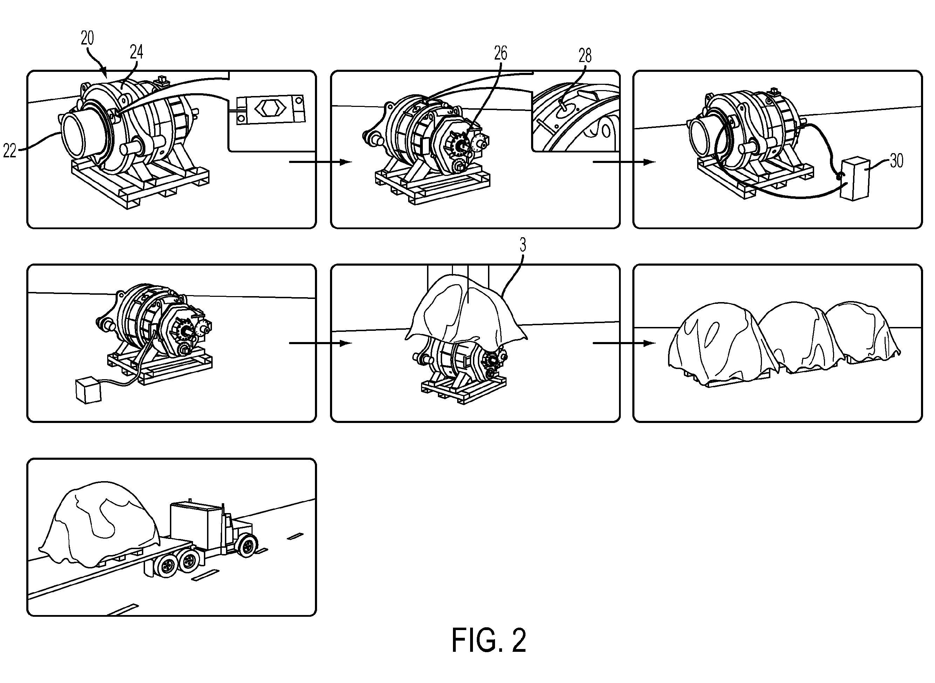

A method of handling such a gearbox 20 is generally shown in Fig. 2. The gearbox includes an input shaft 22 extending into a housing 24, which includes one or more gear stages for increasing rotational speeds delivered by the input shaft. An output shaft 26 extends from the housing so that the higher speeds can be transmitted to a generator. The arrangement of components within the housing and other details related to the gearbox will not be discussed because the method described below may be used for many different types of gearboxes.

In general, the method involves mounting a relative humidity sensor 28 to the gearbox. The type and mounting location of the relative humidity sensor are selected so that the sensor can measure the relative humidity both inside and outside the gearbox when mounted. For example, the relative humidity sensor may be mounted in a port or borehole so that different portions of the relative humidity sensor are exposed to the interior and exterior of the gearbox.

A dehumidifier 30 is then connected to the gearbox, for example by attaching hoses to different locations. The hoses communicate with the inside of the gearbox. One of the hoses delivers gas (e.g., air, carbon dioxide, nitrogen, etc.) from the dehumidifier, and the other returns gas to the dehumidifier. In Fig. 2 the hoses are shown as being attached to opposite ends of the gearbox.

The method also involves sealing the input and output shafts to prevent moisture from entering the gearbox and operating the dehumidifier to reduce the relative humidity inside the gearbox. It is preferred that the relative humidity is reduced to 10-15% or lower. Such a level is particularly effective at reducing the risk of corrosion inside the gearbox. Higher levels of relative humidity may be acceptable based on rotation intervals (i.e., periods of time between when the input or output shaft is driven to rotate components inside the gearbox). The following relationship has been discovered to sufficiently reduce the risk of corrosion for wind turbine gearboxes:

| | | | | | |
|---|---|---|---|---|---|
| Maximum relative humidity during storage | 50% | 60% | 70% | 80% | 90% |
| Maximum period between rotations | None | 6 months | 3 months | 3 weeks | 1 week |

Short-term activities between storage, such as loading/unloading steps and intermediate transport, may have the tendency to increase relative humidity levels. For the above relationship, the risk of corrosion is still considered to be sufficiently reduced if the relative humidity does not exceed values 10% higher than those listed during short-term activities lasting up to one hour.

The dehumidifier is shown in Fig. 2 as a mobile unit positioned next to the gearbox, but may alternatively be mounted to the gearbox. The mounting may be done before operating the dehumidifier or afterwards. Either way, keeping the dehumidifier with the gearbox makes it more readily available for use later on. The gearbox and dehumidifier may be transported together from one location (e.g., a gearbox manufacturer's facility) to another location (e.g., a storage facility of the wind turbine manufacturer). A cover 32 may be arranged over the gearbox and dehumidifier prior to such transport.

The first period of time between rotations may begin after the final stages of the gearbox assembly/manufacturing process. In particular, a final "spin test" or a rotation during a final test in production may be performed by the gearbox manufacturer, after which the above relationship is taken into account-by the gearbox manufacturer, wind turbine manufacturer, or both-to determine whether dehumidification is required and to what extent. The determination is made based on the next planned rotation. Alternatively, the next rotation is planned based on the relative humidity, which may be monitored regardless.

Rotations may be achieved by connecting a lubrication system 34 to the gearbox and filling gearbox with lubricant to at least a predetermined minimum level. An auxiliary drive ("turner gear") 36 is then mounted to the gearbox if not already present (i.e., mounted earlier). The auxiliary drive is then used to rotate the output shaft of the gearbox. Driving the output shaft results in components within the gearbox and the other shaft being rotated. The rotations and lubrication help prevent false brinelling. After the rotation procedure the gearbox may be dehumidified again by repeating the steps described earlier above.

The embodiment described above is merely an example of the invention defined by the claims that appear below. Those skilled in the design of gearboxes will appreciate additional examples, modifications, and advantages based on the description. With this in mind, the details of the embodiment shown and described should not be seen to necessarily further limit the scope of the claims below.

## Claims

1. A method of handling a gearbox, comprising:
sealing input and output shafts of the gearbox to prevent moisture from entering the gearbox at the input and output shafts;
connecting a dehumidifier to the gearbox, the dehumidifier communicating with an interior of the gearbox; and
operating the dehumidifier to reduce the relative humidity inside the gearbox.

2. A method according to any of the preceding claims, further comprising:
mounting a relative humidity sensor to the gearbox, wherein the relative humidity sensor is configured to measure the relative humidity inside and outside the gearbox when mounted.

3. A method according to claim 1, wherein connecting a dehumidifier comprises mounting the dehumidifier to the gearbox.

4. A method according to claim 2, wherein the dehumidifier is mounted to the gearbox at manufacturing location, the method further comprising:
transporting the gearbox to a storage location while the dehumidifier is mounted thereto.

5. A method according to claim 3, further comprising:
arranging a cover on the gearbox prior to transporting the gearbox to the storage location, wherein the cover extends over the dehumidifier.

6. A method according to any of the preceding claims, wherein operating the dehumidifier comprises injecting carbon dioxide or nitrogen into the gearbox.

7. A method according to any of the preceding claims, wherein operating the dehumidifier comprises reducing the relative humidity to 15% or lower.

8. A method according to claim 7, wherein operating the dehumidifier comprises reducing the relative humidity to 10-15%.

9. A method according to claim 1, further comprising:
storing the gearbox for a period of time;
monitoring the relative humidity within the gearbox; and
maintaining the relative humidity below a predetermined amount based on the period of time.

10. A method according to claim 9, wherein the period of time for storage is at least 6 months and the predetermined level of relative humidity is less than 50%.

11. A method according to claim 9 or 10, wherein the period of time for storage is 3-6 months and the predetermined level of relative humidity is less than 60%.

12. A method according to any of the preceding claims, further comprising:
connecting a lubrication system to the gearbox after storing the gearbox for a period of time;
filling gearbox with lubricant to at least a predetermined minimum level;
mounting an auxiliary drive to the gearbox; and
rotating the gearbox output shaft with the auxiliary drive.

13. A method according to claim 12, further comprising:
repeating the steps of claim 1 after rotating the gearbox input shaft or output shaft.
